# EUROPÄISCHE PATENTSCHRIFT

(11) **EP 1 754 106 B1**
(45) Veröffentlichungstag und Bekanntmachung des Hinweises auf die Patenterteilung: **04.08.2010**
(21) Anmeldenummer: 05755104.6
(22) Anmeldetag: 17.05.2005
(51) Int. Cl.: G03B 13/12, G03B 13/04, G03B 17/20, G03B 19/20

(54) **Vorrichtung zum Einblenden von Informationen in den Sucherstrahlengang einer Laufbildkamera**
Device for blending information into the finder beam path of a motion picture camera
Dispositif de surimposition d'informations dans la trajectoire du faisceau du viseur d'une camera

(30) Priorität: 21.05.2004 DE 102004025992
(43) Veröffentlichungstag der Anmeldung: 21.02.2007
(73) Patentinhaber: Arnold & Richter Cine Technik GmbH & Co. Betriebs KG, 80799 München (DE)
(72) Erfinder: HAUBMANN, Michael, B., A-1230 Wien (AT)
(74) Vertreter: Ninnemann, Detlef
(86) Internationale Anmeldenummer: PCT/DE2005/000920
(87) Internationale Veröffentlichungsnummer: WO 2005/114318

(56) Entgegenhaltungen:
- DE-A1- 2 734 792
- US-A- 5 552 845
- PATENT ABSTRACTS OF JAPAN Bd. 1998, Nr. 05, 30. April 1998 (1998-04-30) -& JP 10 010633 A (OLYMPUS OPTICAL CO LTD), 16. Januar 1998 (1998-01-16) in der Anmeldung erwähnt
- PATENT ABSTRACTS OF JAPAN Bd. 1999, Nr. 04, 30. April 1999 (1999-04-30) -& JP 11 015063 A (CANON INC), 22. Januar 1999 (1999-01-22)
- PATENT ABSTRACTS OF JAPAN Bd. 1996, Nr. 03, 29. März 1996 (1996-03-29) -& JP 07 306444 A (NIKON CORP), 21. November 1995 (1995-11-21)

## Beschreibung

Die Erfindung bezieht sich auf eine Vorrichtung zum Einblenden von Informationen in den Sucherstrahlengang einer Laufbildkamera gemäß dem Oberbegriff des Anspruchs 1.

Aus der DE 27 34 792 C2 ist ein Suchersystem für eine Filmkamera bekannt, die eine mit der Bewegung eines Laufbildfilms synchronisierte rotierende Spiegelblende aufweist, die den von einem Aufnahmeobjektiv zur Filmebene verlaufenden Aufnahmestrahlengang periodisch unterbricht und in einen Sucherstrahlengang abzweigt, so dass ein Abbild der aufzunehmenden Szene abwechselnd auf den Laufbildfilm projiziert und von der rotierenden Spiegelblende in den Sucherstrahlengang abgelenkt wird. Im Sucherstrahlengang liegt in der gleichen Entfernung von der reflektierenden Oberfläche der rotierenden Spiegelblende wie die Filmebene eine Bildebene, wo das in der Belichtungspause für den Laufbildfilm entworfene Sucherbild von einer Übertragungsoptik als reelles Bild in die Ebene einer Bildfeldblende abgebildet wird, wo es durch ein Okular betrachtet werden kann. In der Bildebene ist eine Mattscheibe angeordnet, die durch einen halbdurchlässigen Spiegel oder Strahlteiler von einer auf der gegenüberliegenden Seite des halbdurchlässigen Spiegels oder Strahlteilers angeordneten Lichtquelle beleuchtet wird, die bei ungünstigen Lichtverhältnissen eingeschaltet werden kann und eine auf der Mattscheibe angebrachte Markierungsanordnung zur Eingrenzung der Aufnahmebilder beleuchtet.

Wird die Filmkamera für unterschiedliche Filmformate eingesetzt, so sind Mattscheiben mit unterschiedlichen Formateinzeichnungen oder verschiedene manuell tauschbare Formatmasken für die unterschiedlichen Einzeichnungen auf der Mattscheibe erforderlich. Da die Mattscheiben - wie bei dem aus der DE 27 34 792 C2 bekannten Suchersystem - Teil eines mehrteiligen Suchersystems sind, ist bei einem Austausch der Formatmaske bzw. der mit einer Formateinzeichnung versehenen Mattscheibe der Austausch des gesamten mehrteiligen Systems einschließlich der Lichtquellenanordnung erforderlich.

Das Vorhalten verschiedener mehrteiliger Suchersysteme, Formatmasken oder Mattscheiben mit unterschiedlichen Formateinzeichnungen ist mit erheblichen Kosten und der Austausch der mehrteiligen Suchersysteme einschließlich der Lichtquellenanordnung, der Formatmasken und/oder Mattscheiben mit unterschiedlichen Formateinzeichnungen mit einem erheblichen Aufwand verbunden, wobei Eingriffe in das Innere einer Laufbildkamera spezielle Kenntnisse und große Sorgfalt erfordern und bei eingelegtem Film nur unter speziellen äußeren Bedingungen, beispielsweise in einer Dunkelkammer, durchführbar sind.

Neben einer Formateinzeichnung auf der Mattscheibe einer Filmkamera, mit der ein Kameramann auch bei sehr dunklen Aufnahmesituationen ein Motiv beurteilen kann, sind zusätzlich dynamisch veränderliche aufnahme- und kamerarelevante Daten wie die Filmtransportgeschwindigkeit, die Kapazität des die Laufbildkamera speisenden Akkumulators, die Versorgungsspannung, Objektivdaten, der Öffnungswinkel einer verstellbaren rotierenden Spiegelblende und dergleichen für den Kameramann von Interesse, die während der Betrachtung des Motivs in den Sucherstrahlengang eingeblendet werden und eine Betrachtung der aufzunehmenden Szene ermöglichen, ohne dass das Auge des Kameramanns vom Okular entfernt werden muss.

Aus der JP 10010633 A ist eine Sucheranordnung für eine Stehbildkamera bekannt, bei der im Sucherstrahlengang ein DMD-(Digital Micromirror Device)-Chip angeordnet ist, der eine Vielzahl von zweidimensional angeordneten Mikrospiegelelementen aufweist, die aus beweglich angelenkten Mikrospiegeln bestehen, die beim Anlegen einer Spannung digital den Anlenkwinkel verändern, d.h. zwischen zwei unterschiedlichen Ausrichtungen der Spiegelfläche verschwenkt werden können. Der im Sucherstrahlengang angeordnete DMD-Chip wird von einer DMD-Treiberschaltung angesteuert und blendet entweder die über ein Objektiv empfangenen Aufnahmestrahlen oder die von einem Display abgegebene Information in den Sucherstrahlengang, so dass entweder ein aufzunehmendes Objekt oder die Displayinformation durch den Sucher betrachtet werden kann. Das Display und die den DMD-Chip ansteuernde Treiberschaltung werden von einer gemeinsamen CPU angesteuert.

Aufgabe der vorliegenden Erfindung ist es, eine Vorrichtung zum Einblenden von Informationen in den Sucherstrahlengang einer Laufbildkamera der eingangs genannten Art herzustellen, die unterschiedliche Formateinzeichnungen mit oder ohne Formatausleuchtung ohne einen Austausch von im Sucherstrahlengang angeordneten Komponenten und/oder die Einblendung von aufnahmebezogenen und/oder kamerarelevanten Informationen in den Sucherstrahlengang der Laufbildkamera ermöglicht.

Diese Aufgabe wird erfindungsgemäß durch die Merkmale des Anspruchs 1 gelöst.

Die erfindungsgemäße Lösung stellt eine Vorrichtung zum Einblenden von Informationen in den Sucherstrahlengang einer Laufbildkamera zur Verfügung, die den Einsatz unterschiedlicher Formateinzeichnungen mit oder ohne Formatausleuchtung ermöglicht, ohne dass im Sucherstrahlengang angeordnete Komponenten ausgetauscht werden müssen. Alternativ oder zusätzlich können aufnahmebezogene und/oder kamerarelevante Informationen in den Sucherstrahlengang der Laufbildkamera eingeblendet werden, so dass eine gleichzeitige Betrachtung eines Aufnahmebildes mit den ggf. ausgeleuchteten Bildfeldbegrenzungen sowie den aufnahme- und kameraspezifischen Daten gewährleistet ist.

Die erfindungsgemäße Lösung geht von der Überlegung aus, einen auch zur Einblendung von Informationen in den Sucherstrahlengang einer Kamera bekannten DMD-Chip so in dem Sucherstrahlengang einer Laufbildkamera anzuordnen und die rasterförmig angeordneten Mikrospiegel so anzusteuern, dass sowohl eine gleichbleibende Formateinzeichnung zur Bildfeldbegrenzung eines Aufnahmebildes als auch eine Einblendung zusätzlicher aufnahme- und kameraspezifischer Daten in den Sucherstrahlengang zur Betrachtung durch das Okular realisiert wird. Zu diesem Zweck wird jeweils ein Teil der Mikrospiegel abgelenkt und reflektiert einen seiner Anordnung im Raster des DMD-Chips entsprechenden Abschnitt einer Informationsfläche oder des Aufnahmebildes in den Sucherstrahlengang, während der verbleibende Teil der Mikrospiegel im Ruhe- oder Ausgangszustand verharrt und - je nach Ausrichtung des DMD-Chips - einen seiner Anordnung im DMD-Chip entsprechenden Teil des Aufnahmebildes oder der Informationsfläche in den Sucherstrahlengang reflektiert.

Da die Mikrospiegel des DMD-Chips um einen vorgegebenen Winkel um eine Achse kippen, wird die Informationsfläche vorzugsweise seitlich versetzt zum Sucherstrahlengang angeordnet, so dass in Abhängigkeit von der Größe der Informationsfläche und deren Abstand vom DMD-Chip jeder Abschnitt der Informationsfläche in den Sucherstrahlengang eingeblendet werden kann.

Bei einem Parallelversatz des DMD-Chips in einer Schärfenebene des Sucherstrahlengangs ist eine erste Sucheroptik vorgesehen, die das vom Aufnahmestrahlengang der Laufbildkamera abgezweigte und auf eine im Sucherstrahlengang angeordnete Mattscheibe oder Faserplatte abgebildete Sucherbild auf den Mikrospiegeln des DMD-Chips abbildet, von wo aus das Sucherbild von einer zweiten, zur ersten Sucheroptik achsparallel angeordneten Sucheroptik entsprechend dem Aufbau einer Großformatkamera in den Sucherstrahlengang weitergeleitet wird, wo es beispielsweise auf einer Mattscheibe oder Faserplatte abgebildet und über ein Okular betrachtet werden kann.

Durch einen zur zweiten Sucheroptik seitlichen Versatz der Informationsfläche können durch Verschwenken eines Teils der Mikrospiegel des DMD-Chips zur Informationsfläche eine Formateinzeichnung und/oder aufnahme- oder kameraspezifische Daten in den Sucherstrahlengang eingeblendet werden.

Vorzugsweise ist der DMD-Chip in der Schärfenebene des von einem Aufnahmestrahlengangs der Laufbildkamera abgezweigten Sucherstrahlengangs angeordnet.

Die Anordnung des DMD-Chips kann entweder mit einem Parallelversatz zum Sucherstrahlengang oder zentrisch zum Sucherstrahlengang der Laufbildkamera erfolgen.

Bei einer zentrischen Anordnung des DMD-Chips im Sucherstrahlengang der Laufbildkamera ist zwischen dem DMD-Chip und der Abbildungsoptik des Sucherstrahlengangs eine optische Entzerrungseinrichtung, vorzugsweise eine Zylinderlinse angeordnet, die das durch die Umlenkung des Sucherstrahlengangs verzerrte Sucherbild entzerrt.

Bei einer zentrischen Anordnung des DMD-Chips im Sucherstrahlengang der Laufbildkamera wird die Informationsfläche vorzugsweise spiegelsymmetrisch zur Zylinderlinse in Bezug auf den Sucherstrahlengang angeordnet, wobei der die Sucherstrahlen zur Abbildungsoptik reflektierende eine Teil der Mikrospiegel mittels der Treiberschaltung abgelenkt wird.

Die Ansteuerung des DMD-Chips erfolgt über eine Treiberschaltung, die entweder den den Sucherstrahlengang zur Abbildungsoptik reflektierenden einen Teil der Mikrospiegel oder den zumindest zeitweise aus dem Sucherstrahlengang geschwenkten anderen Teil der Mikrospiegel in eine Ablenkstellung schwenkt.

Je nach Anordnung des DMD-Chips im Sucherstrahlengang der Laufbildkamera wird somit entweder die Information durch Ablenken eines Teils der Mikrospiegel in den Sucherstrahlengang eingeblendet oder der Sucherstrahlengang wird über die mittels der Treiberschaltung abgelenkten Mikrospiegel reflektiert, während die Information durch die in der Ruhestellung befindlichen Mikrospiegel in den Sucherstrahlengang eingeblendet wird.

Da die Mikrospiegel des DMD-Chips jeweils einen Teil der Informationsfläche in den Sucherstrahlengang reflektieren, kann die Informationsfläche ein- oder mehrfarbig sein. Dadurch besteht die Möglichkeit, dass beispielsweise dem die Formateinzeichnung in den Sucherstrahlengang einblendenden Teil der Mikrospiegel ein erster Flächenabschnitt der Informationsfläche zugeordnet ist, während einem zweiten Teil der Mikrospiegel, der zur Einblendung aufnahme- oder kameraspezifischer Daten in den Sucherstrahlengang bestimmt ist, auf einen zweiten, sich farblich vom ersten Flächenabschnitt unterscheidenden Flächenabschnitt der Informationsfläche zugeordnet ist.

Die Informationsfläche selbst kann unbeleuchtet ein- oder mehrfarbig ausgebildet sein, mit einem Auflicht beleuchtet oder in transparenter Ausführung hinterleuchtet werden, so dass auch bei ungünstigen Lichtverhältnissen die Formateinzeichnung im Sucher der Laufbildkamera erkennbar bleibt.

Je nach Art der in den Sucherstrahlengang einzublendenden Informationen steuert die Treiberschaltung einen vorbestimmten oder veränderlichen Teil der die Informationsfläche zur Abbildungsoptik reflektierenden Mikrospiegel an. Die Ansteuerung eines vorbestimmten Teils der Mikrospiegel eignet sich insbesondere zur Einblendung von Formateinzeichnungen oder einer Mittenmarkierung, wobei unterschiedliche Reihen und Spalten der raster- oder matrixförmig angeordneten Mikrospiegel des DMD-Chips unterschiedlich großen Formateinzeichnungen entsprechen.

Die Ansteuerung eines variablen Teils der Mikrospiegel des DMD-Chips eignet sich insbesondere für die Einblendung aufnahme- oder kameraspezifischer Daten in den Sucherstrahlengang, wobei die von der Treiberschaltung abgegebenen Steuersignale in Abhängigkeit von den Steuersignalen einer Informations-Steuerschaltung ausgelöst werden, die die gewünschten aufnahme- oder kameraspezifischen Daten in Abhängigkeit von Eingabedaten oder Sensorsignalen erzeugt.

Die Helligkeit oder Intensität der in den Sucherstrahlengang eingeblendeten Information kann dadurch variiert werden, dass die Treiberschaltung den Teil der Mikrospiegel, der jeweils einen Abschnitt der Informationsfläche zur Abbildungsoptik reflektiert , mit einem veränderbaren Tastverhältnis vom Sucherstrahlengang zur Informationsfläche ablenkt. Durch Verlängerung des Zeitabschnitts, mit dem die Informationsfläche in den Sucherstrahlengang eingeblendet wird, steigt somit die Helligkeit oder Intensität der in den Sucherstrahlengang eingeblendeten Informationen, das heißt, der eingeblendeten Formateinzeichnung und/oder der aufnahme- oder kameraspezifischen Daten innerhalb einer Periode der Filmaufnahmefrequenz.

Weitere Merkmale der Erfindung und mit der erfindungsgemäßen Lösung erzielbare Vorteile sollen anhand von in den Zeichnungen dargestellten Ausführungsbeispielen erläutert werden. Es zeigen:
- Fig. 1: eine schematische Darstellung eines Suchersystems einer Laufbildkamera mit einem DMD-Chip zur Einblendung von Informationen in den Sucherstrahlen- gang mit einem Parallelversatz des Sucherstrahlenganges und
- Fig. 2: eine schematische Darstellung eines Suchersystems einer Laufbildkamera mit einem zentrisch im Sucherstrahlengang angeordneten DMD-Chip zur Einblen- dung von Informationen in den Sucherstrahlengang.

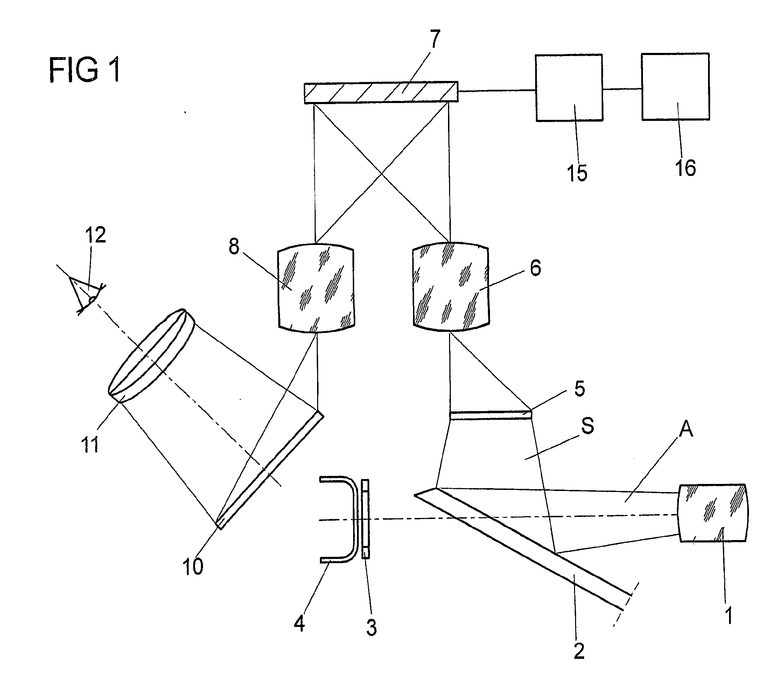

Das in Fig. 1 dargestellte Suchersystem zeigt schematisch ein Aufnahmeobjektiv 1 einer Laufbildkamera und eine mit der Filmaufnahmefrequenz rotierende Spiegelblende 2, die den vom Aufnahmeobjektiv 1 ausgehenden Aufnahmestrahlengang A zu einem in einer Filmebene hinter einem Bildfenster 3 bewegten Laufbildfilm 4 zur Filmbildbelichtung durchlässt oder periodisch in einen Sucherstrahlengang S ablenkt. Im Sucherstrahlengang S ist eine Faserplatte oder eine beispielsweise als plankonvexe Linse ausgebildete Mattscheibe 5 ohne Einzeichnung angeordnet, deren Planseite mattiert ist und sich in der Bildebene befindet, das heißt, den gleichen Abstand zur rotierenden Spiegelblende 2 aufweist wie die Filmebene, in der der Laufbildfilm 4 intermittierend transportiert wird.

Das auf der Mattscheibe oder Faserplatte 5 abgebildete Sucherbild wird mittels einer ersten Sucheroptik 6 zu einem DMD-Chip 7 übertragen, der in der Schärfenebene der Sucheroptik 6 angeordnet ist. Der DMD-Chip 7 weist eine Vielzahl raster- oder matrixförmig angeordneter und mittels einer Treiberschaltung 15 schnell ansteuerbarer Mikro-Kippspiegel auf einem Halbleitersubstrat auf. Die Mikrospiegel können je nach Ansteuerung durch die Treiberschaltung 15 zwischen zwei Endstellungen, die einen Winkel von beispielsweise 10-12° einschließen, verschwenkt werden. Durch die raster- oder matrixförmige Anordnung der Mikrospiegel des DMD-Chips 7 entspricht jeder Mikrospiegel einem Bildpixel, so dass ein dem DMD-Chip 7 von der Treiberschaltung 15 zur Ansteuerung der Mikrospiegel zugeführter Bildcode jeden einzelnen Mikrospiegel initiiert und dementsprechend in der Ruhestellung lässt oder in eine Auslenkstellung ablenkt.

Eingangsseitig ist die Treiberschaltung 15 mit einer Steuerschaltung 16 und diese mit einer Eingabetastatur, Kamera- oder Bildaufnahmesensoren verbunden bzw. Teil eines Mikroprozessors der Laufbildkamera zur Steuerung von Kamerafunktionen und Verarbeitung von eingegebenen oder sensorisch erfassten Daten.

Achsparallel zur ersten Sucheroptik 6 ist eine zweite Sucheroptik 8 angeordnet, die das vom DMD-Chip 7 reflektierte Sucherbild auf einer Einstellscheibe 10 in Form einer Mattscheibe oder Faserplatte abbildet, wo das Sucherbild über ein Okular 11 vom Auge 12 eines Kameramanns betrachtet werden kann.

Bei der in Fig. 1 dargestellten Anordnung des DMD-Chips 7 in der Schärfenebene des Sucherstrahlengangs S werden die Mikrospiegel des DMD-Chips 7, die der Übertragung des Sucherbildes dienen, angesteuert, so dass die von der ersten Sucheroptik 6 in der Schärfenebene abgebildeten Bildelemente des Sucherbildes zur achsparallelen zweiten Sucheroptik 8 reflektiert werden. An den Stellen einer Formateinzeichnung oder Dateneinblendung werden die betreffenden Mikrospiegel nicht abgelenkt, so dass an diesen Stellen eine schwarze oder hinterleuchtete Fläche oder Linie eingeblendet wird.

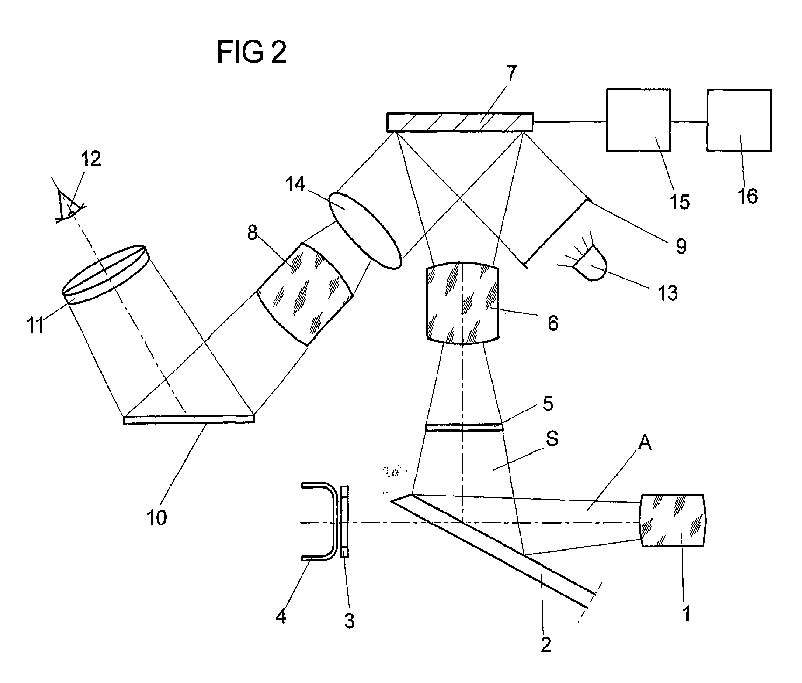

Fig. 2 zeigt schematisch ebenfalls ein Suchersystem einer Laufbildkamera mit einem Aufnahmeobjektiv 1 einer Laufbildkamera und eine mit der Filmaufnahmefrequenz rotierende Spiegelblende 2, die den vom Aufnahmeobjektiv 1 ausgehenden Aufnahmestrahlengang A zu einem in einer Filmebene hinter einem Bildfenster 3 bewegten Laufbildfilm 4 zur Filmbildbelichtung durchlässt oder periodisch in einen Sucherstrahlengang S ablenkt. Im Sucherstrahlengang S ist eine Faserplatte oder eine beispielsweise als plankonvexe Linse ausgebildete Mattscheibe 5 angeordnet, deren Planseite mattiert ist und sich in der Bildebene befindet, das heißt, den gleichen Abstand zur rotierenden Spiegelblende 2 aufweist wie die Filmebene, in der der Laufbildfilm 4 intermittierend transportiert wird.

Das auf der Mattscheibe oder Faserplatte 5 abgebildete Sucherbild wird mittels einer ersten Sucheroptik 6 zu einem DMD-Chip 7 übertragen, der in der Schärfenebene der Sucheroptik 6 angeordnet ist. Bei dieser Anordnung der optischen Elemente des Suchersystems ist der DMD-Chip 7 zentrisch im Sucherstrahlengang S angeordnet, wobei das von der rotierenden Spiegelblende 2 in den Sucherstrahlengang S abgelenkte Sucherbild über eine erste Sucheroptik 6 in der Schärfenebene, in der der DMD-Chip 7 angeordnet ist, abgebildet wird. Der DMD-Chip 7 ist ebenfalls über eine Treiberschaltung 15 mit einer Steuerschaltung 16 bzw. einem Mikroprozessor der Laufbildkamera verbunden, die die raster- oder matrixförmig angeordneten Mikrospiegel des DMD-Chips 7 ansteuern.

Die zur Übertragung des Sucherbildes dienenden Mikrospiegel des DMD-Chips 7 werden durch die Treiberschaltung 15 abgelenkt und reflektieren das von der ersten Sucheroptik 6 in der Schärfenebene abgebildete Bild zu einer Zylinderlinse 14 zur Entzerrung des Sucherbildes infolge des Bildversatzes. Der Zylinderlinse 14 nachgeschaltet ist eine zweite Sucheroptik 8, eine Einstellscheibe 10 in Form einer Mattscheibe oder Faserplatte, auf der das Sucherbild über ein Okular 11 vom Auge 12 eines Kameramanns betrachtet werden kann.

Spiegelsymmetrisch zur Zylinderlinse 14 in Bezug auf die erste Sucheroptik 6 ist eine Informationsfläche 9 angeordnet. Der nicht abgelenkte Teil der Mikrospiegel des DMD-Chips 7 reflektiert Bildpixel der Informationsfläche 9 in den Sucherstrahlengang, so dass in Abhängigkeit von der Anzahl und Zuordnung nicht abgelenkter Mikrospiegel des DMD-Chips 7 eine feste oder variable Information in den Sucherstrahlengang eingeblendet werden kann. Die Informationsfläche 9 kann unbeleuchtet ein- oder mehrfarbig ausgebildet sein oder über eine Auflichtanordnung angeleuchtet bzw. transparent ausgebildet und mittels einer Lichtquellenanordnung 13 hinterleuchtet werden.

Die Einblendung einer Formateinzeichnung in den Sucherstrahlengang erfolgt bei der in Fig. 2 dargestellten Anordnung der optischen Elemente des Suchersystems durch Ansteuerung eines Teils der Mikrospiegel des DMD-Chips 7, der eine rahmenförmige Formateinzeichnung vorgebbarer Größe in den Sucherstrahlengang S einspiegelt. Zusätzlich kann ein variabler Teil der Mikrospiegel des DMD-Chips von der Treiberschaltung 15 derart angesteuert werden, dass eine oder mehrere dynamisch veränderlichen Aufnahmedaten, wie Filmtransportgeschwindigkeit, Objektivdaten, Winkelstellung der rotierenden Spiegelblende 2 mit Verstellflügeln sowie kamerarelevante Daten wie Akkumulatorkapazität, Versorgungsspannung und dergleichen in den Sucherstrahlengang eingeblendet werden.

Durch die Möglichkeit der individuellen Ansteuerung der Mikrospiegel des DMD-Chips 7 kann somit eine beliebige Formateinzeichnung bzw. Formatbeleuchtung in den Sucherstrahlengang S eingeblendet werden, ohne dass ein Eingriff in den Sucherstrahlengang S der Laufbildkamera erforderlich ist.

In den Sucherstrahlengang S eingeblendete aufnahme- oder kameraspezifische Daten können durch variables Ansteuern der die dynamischen Informationen in den Sucherstrahlengang S einblendenden Mikrospiegel des DMD-Chips 7 über das Sucherbild geblendet werden, da die betreffenden Mikrospiegel zwischen dem von der ersten Sucheroptik 6 in der Schärfenebene abgebildeten Sucherbild zur Informationsfläche 9 hin- und herschwenken. Durch eine Veränderung der Zeitdauer der Ausrichtung der betreffenden Mikrospiegel auf die Informationsfläche 9 oder das von der ersten Sucheroptik 6 abgebildete Sucherbild kann die Helligkeit der Informationseinblendung bestimmt werden. Dadurch kann auch die Helligkeit einer Formateinzeichnung oder Dateneinblendung den jeweiligen externen Helligkeitsbedingungen angepasst werden, so dass dem Kameramann eine optimale Betrachtung sowohl des Sucherbildes als auch der eingeblendeten aufnahme- oder kameraspezifischen Daten ermöglicht wird.

### Bezugszeichenliste

- 1: Aufnahmeobjektiv
- 2: rotierende Spiegelblende
- 3: Bildfenster
- 4: Laufbildfilm
- 5: Mattscheibe
- 6: Erste Sucheroptik
- 7: DMD-(Digital Micromirror Device)-Chip
- 8: Zweite Sucheroptik
- 9: Informationsfläche
- 10: Einstellscheibe
- 11: Okular
- 12: Auge
- 13: Lichtquellenanordnung
- 14: Zylinderlinse
- 15: zweite Sucheroptik
- 16: Treiberschaltung
- A: Aufnahmestrahlengang
- S: Sucherstrahlengang

## Patentansprüche

1. Vorrichtung zum Einblenden von Informationen in den Sucherstrahlengang (S) einer Laufbildkamera, in dem eine Abbildungsoptik (10, 11) und ein DMD-(Digital Micromirror Device)-Chip (7) mit einer Vielzahl rasterförmig angeordneter Mikrospiegel angeordnet sind, die elektronisch gesteuert schwenkbar sind,
wobei der eine Teil der Mikrospiegel den Sucherstrahlengang (S) zur Abbildungsoptik (10, 11) reflektiert und der andere Teil der Mikrospiegel zumindest zeitweise aus dem Sucherstrahlengang (S) geschwenkt wird und/oder jeweils einen Abschnitt einer seitlich versetzt zum Sucherstrahlengang (S) angeordneten Informationsfläche (9) zur Abbildungsoptik (10, 11) reflektiert, und so den Einsatz unterschiedlicher Format einzeichnungen ermöglicht ohne Austausch von im Sucherstrahlungang angeordneten Komponenten.

2. Vorrichtung nach Anspruch 1, **dadurch gekennzeichnet, dass** eine erste Sucheroptik (6) im Sucherstrahlengang (S) zwischen einer Abzweigung des Sucherstrahlengangs (S) vom Aufnahmestrahlengang (A) und dem DMD-Chip (7) und achsparallel zur ersten Sucheroptik (6) eine zweite Sucheroptik (8) zwischen dem DMD-Chip (7) und der Abbildungsoptik (10, 11) angeordnet ist und dass die Informationsfläche (9) versetzt zur ersten oder zweiten Sucheroptik (6; 8) angeordnet ist.

3. Vorrichtung nach Anspruch 1 oder 2, **dadurch gekennzeichnet, dass** der DMD-Chip (7) in der Schärfenebene des von einem Aufnahmestrahlengang (A) der Laufbildkamera abgezweigten Sucherstrahlengang (S) angeordnet ist.

4. Vorrichtung nach Anspruch 3, **gekennzeichnet durch** eine parallel versetzte Anordnung des DMD-Chips (7) im Sucherstrahlengang (S) der Laufbildkamera.

5. Vorrichtung nach Anspruch 3, **dadurch gekennzeichnet, dass** der DMD-Chip (7) zentrisch im Sucherstrahlengang (S) der Laufbildkamera angeordnet ist.

6. Vorrichtung nach Anspruch 5, **dadurch gekennzeichnet, dass** zwischen dem DMD-Chip (7) und der Abbildungsoptik (10, 11) eine optische Entzerrungseinrichtung, vorzugsweise eine Zylinderlinse (14), angeordnet ist.

7. Vorrichtung nach Anspruch 6, **dadurch gekennzeichnet, dass** die Informationsfläche (9) spiegelsymmetrisch zur Zylinderlinse (14) in Bezug auf den Sucherstrahlengang (S) angeordnet ist und dass der den Sucherstrahlengang (S) zur Abbildungsoptik (10, 11) reflektierende eine Teil der Mikrospiegel mittels der Treiberschaltung (15) abgelenkt wird.

8. Vorrichtung nach mindestens einem der voranstehenden Ansprüche, **dadurch gekennzeichnet, dass** eine den DMD-Chip (7) ansteuernde Treiberschaltung (15) entweder den den Sucherstrahlengang (S) zur Abbildungsoptik (10, 11) reflektierenden einen Teil der Mikrospiegel oder den zumindest zeitweise aus dem Sucherstrahlengang (S) geschwenkten anderen Teil der Mikrospiegel in eine Ablenkstellung schwenkt.

9. Vorrichtung nach mindestens einem der voranstehenden Ansprüche, **gekennzeichnet durch** eine ein- oder mehrfarbige Informationsfläche (9).

10. Vorrichtung nach mindestens einem der voranstehenden Ansprüche, **dadurch gekennzeichnet, dass** die Informationsfläche (9) beleuchtet oder hinterleuchtet ist.

11. Vorrichtung nach mindestens einem der voranstehenden Ansprüche, **dadurch gekennzeichnet, dass** die Treiberschaltung (15) einen vorbestimmten Teil der die Informationsfläche (9) zur Abbildungsoptik (10, 11) reflektierenden Mikrospiegel ansteuert.

12. Vorrichtung nach mindestens einem der voranstehenden Ansprüche 1 bis 10, **dadurch gekennzeichnet, dass** die Treiberschaltung (15) einen veränderlichen Teil der die Informationsfläche (9) zur Abbildungsoptik (10, 11) reflektierenden Mikrospiegel in Abhängigkeit von den Steuersignalen einer Informations-Steuerschaltung (16) ansteuert.

13. Vorrichtung nach mindestens einem der voranstehenden Ansprüche, **dadurch gekennzeichnet, dass** die Treiberschaltung (15) den Teil der Mikrospiegel, der jeweils einen Abschnitt der Informationsfläche (9) zur Abbildungsoptik (10, 11) reflektiert, mit einem veränderbaren Tastverhältnis vom Sucherstrahlengang (S) zur Informationsfläche (9) ablenkt.

14. Vorrichtung nach mindestens einem der voranstehenden Ansprüche 1 bis 12, **dadurch gekennzeichnet, dass** die Treiberschaltung (15) den Teil der Mikrospiegel, der den Sucherstrahlengang (S) zur Abbildungsoptik (10, 11) reflektiert, mit einem veränderbaren Tastverhältnis vom Sucherstrahlengang (S) zur Informationsfläche (9) ablenkt.

## Claims

1. A device for inserting information into the finder beam path (S) of a motion picture camera, in which an imaging optics (10, 11) and a DMD (Digital Micromirror Device) chip (7) with a multiplicity of micromirrors, which are arranged in the form of a grid can be swiveled in an electronically controlled manner, are arranged,
wherein one portion of the micromirrors reflects the finder beam path (S) toward the imaging optics (10, 11), and the other portion of the micromirrors is swiveled at least temporarily out of the finder beam path (S) and/or respectively reflects a section of an information surface (9) toward the imaging optics (10, 11), the information surface (9) being arranged laterally offset from the finder beam path (S), and in this way allows for the use of different format indications without exchanging components arranged in the finder beam path.

2. The device according to claim 1, **characterized in that** a first finder optics (6) is arranged in the finder beam path (S) between a branch-off of the finder beam path (S) from the imaging beam path (A) and the DMD chip (7), and a second finder optics (8) is arranged axially parallel to the first finder optics (6) between the DMD chip (7) and the imaging optics (10, 11) and **in that** the information surface (9) is arranged offset from the first or second finder optics (6; 8).

3. The device according to claim 1 or 2, **characterized in that** the DMD chip (7) is arranged in the focal plane of the finder beam path (S) branched off from an imaging beam path (A) of the motion picture camera.

4. The device according to claim 3, **characterized by** an arrangement of the DMD chip (7) offset in parallel in the finder beam path (S) of the motion picture camera.

5. The device according to claim 3, **characterized in that** the DMD chip (7) is arranged centrally in the finder beam path (S) of the motion picture camera.

6. The device according to claim 5, **characterized in that** an optical rectification device, preferably a cylindrical lens (14), is arranged between the DMD chip (7) and the imaging optics (10, 11).

7. The device according to claim 6, **characterized in that** the information surface (9) is arranged with mirror symmetry relative to the cylindrical lens (14) with reference to the finder beam path (S), and **in that** the one portion of the micromirrors reflecting the finder beam path (S) toward the imaging optics (10, 11) is deflected by means of the driver circuit (15).

8. The device according to at least one of the preceding claims, **characterized in that** a driver circuit (15) driving the DMD chip (7) swivels either the one portion of the micromirrors reflecting the finder beam path (S) toward the imaging optics (10, 11) or the other portion of the micromirrors, which is swiveled at least temporarily out of the finder beam path (S), into a deflecting position.

9. The device according to at least one of the preceding claims, **characterized by** a monochromatic or polychromatic information surface (9).

10. The device according to at least one of the preceding claims, **characterized in that** the information surface (9) is lit or backlit.

11. The device according to at least one of the preceding claims, **characterized in that** the driver circuit (15) drives a predetermined portion of the micromirrors reflecting the information surface (9) toward the imaging optics (10, 11).

12. The device according to at least one of the preceding claims 1 to 10, **characterized in that** the driver circuit (15), in dependence on the control signals of an information control circuit (16), drives a variable portion of the micromirrors reflecting the information surface (9) toward the imaging optics (10, 11).

13. The device according to at least one of the preceding claims, **characterized in that** the driver circuit (15) deflects the portion of the micromirrors which respectively reflects a section of the information surface (9) toward the imaging optics (10,11) with a variable pulse-duty factor from the finder beam path (S) toward the information surface (9).

14. The device according to at least one of the preceding claims 1 to 12, **characterized in that** the driver circuit (15) deflects the portion of the micromirrors which reflects the finder beam path (S) toward the imaging optics (10, 11) with a variable pulse-duty factor from the finder beam path (S) toward the information surface (9).

## Revendications

1. Dispositif pour superposer des informations sur la trajectoire du faisceau de viseur (S) d'une caméra cinématographique, sur laquelle sont disposées une optique de reproduction (10, 11) et une puce DMD (« Digital Micro-mirror Device ») (7) avec une pluralité de micro-miroirs disposés en réseau et qui sont pivotants par commande électronique,
dans lequel une partie des micro-miroirs réfléchit la trajectoire du faisceau de viseur (S) vers l'optique de reproduction (10, 11) et l'autre partie des micro-miroirs est amenée à pivoter au moins temporairement hors de la trajectoire du faisceau de viseur (S) et/ou réfléchit respectivement une portion d'une surface d'informations (9), disposée de façon latéralement décalée par rapport à la trajectoire du faisceau de viseur (S), vers l'optique de reproduction (10, 11), et permet ainsi la mise en oeuvre de différentes incrustations sans changer des composants disposés sur la trajectoire du faisceau de viseur.

2. Dispositif selon la revendication 1, **caractérisé en ce qu'**une première optique de viseur (6) est disposée sur la trajectoire du faisceau de viseur (S) entre une branche de la trajectoire du faisceau de viseur (S) partant de la trajectoire du faisceau de prise de vue (A) et la puce DMD (7), et **en ce que** de façon parallèle à l'axe par rapport à la première optique de viseur (6), une deuxième optique de viseur (8) est disposée entre la puce DMD (7) et l'optique de reproduction (10, 11), et **en ce que** la surface d'informations (9) est disposée de façon décalée par rapport à la première ou la deuxième optique de viseur (6 ; 8).

3. Dispositif selon les revendications 1 ou 2, **caractérisé en ce que** la puce DMD (7) est disposée dans le plan de profondeur de champ de la trajectoire du faisceau de viseur (S) séparée d'une trajectoire du faisceau de prise de vue (A) de la caméra cinématographique.

4. Dispositif selon la revendication 3, **caractérisé par** une disposition décalée en parallèle de la puce DMD (7) sur la trajectoire du faisceau de viseur (S) de la caméra cinématographique.

5. Dispositif selon la revendication 3, **caractérisé en ce que** la puce DMD (7) est disposée au centre sur la trajectoire du faisceau de viseur (S) de la caméra cinématographique.

6. Dispositif selon la revendication 5, **caractérisé en ce qu'**entre la puce DMD (7) et l'optique de reproduction (10, 11), un dispositif d'égalisation optique, de préférence une lentille cylindrique (14), est disposé.

7. Dispositif selon la revendication 6, **caractérisé en ce que** la surface d'informations (9) est disposée en miroir par rapport à la lentille cylindrique (14) en relation avec la trajectoire du faisceau de viseur (S), et **en ce que** ladite une partie des micro-miroirs réfléchissant la trajectoire du faisceau de viseur (S) vers l'optique de reproduction (10, 11) est déviée au moyen du circuit d'excitation (15).

8. Dispositif selon au moins l'une quelconque des revendications précédentes, **caractérisé en ce qu'**un circuit d'excitation (15) pilotant la puce DMD (7) fait pivoter dans une position de déviation soit la partie des micro-miroirs réfléchissant la trajectoire du faisceau de viseur (S) vers l'optique de reproduction (10, 11), soit l'autre partie des micro-miroirs amenée à pivoter au moins temporairement hors de la trajectoire du faisceau de viseur (S).

9. Dispositif selon au moins l'une quelconque des revendications précédentes, **caractérisé par** une surface d'informations (9) en une ou plusieurs couleurs.

10. Dispositif selon au moins l'une quelconque des revendications précédentes, **caractérisé en ce que** la surface d'informations (9) est éclairée ou rétro-éclairée.

11. Dispositif selon au moins l'une quelconque des revendications précédentes, **caractérisé en ce que** le circuit d'excitation (15) pilote une partie prédéterminée des micro-miroirs réfléchissant la surface d'informations (9) vers l'optique de reproduction (10, Il).

12. Dispositif selon au moins l'une quelconque des revendications précédentes 1 à 10, **caractérisé en ce que** le circuit d'excitation (15) pilote une partie variable des micro-miroirs réfléchissant la surface d'informations (9) vers l'optique de reproduction (10, 11) en fonction des signaux de commande d'un circuit de commande d'informations (16).

13. Dispositif selon au moins l'une quelconque des revendications précédentes, **caractérisé en ce que** le circuit d'excitation (15) dévie la partie des micro-miroirs réfléchissant respectivement une portion de la surface d'informations (9) vers l'optique de reproduction (10, 11), avec un taux d'impulsions variable de la trajectoire du faisceau de viseur (S) vers la surface d'informations (9).

14. Dispositif selon au moins l'une quelconque des revendications précédentes 1 à 12, **caractérisé en ce que** le circuit d'excitation (15) dévie la partie des micro-miroirs réfléchissant la trajectoire du faisceau de viseur (S) vers l'optique de reproduction (10, 11) avec un taux d'impulsions variable de la trajectoire du faisceau de viseur (S) vers la surface d'informations (9).
